# EUROPEAN PATENT APPLICATION

(11) **EP 2 949 576 A1**
(43) Date of publication of application: **02.12.2015**
(21) Application number: 15001431.4
(22) Date of filing: 13.05.2015
(51) Int. Cl.: B64C 11/00, A47D 7/04, F21V 21/088, B64D 11/00

(54) **BASSINET WITH ILLUMINATION SYSTEM**

(30) Priority: 27.05.2014 US 201414288031
(71) Applicant: Airbus Operations GmbH, 21129 Hamburg (DE)
(72) Inventor: Rubel, Aaron P., St. Daphne, AL 36526 (US); Deason, Rick, St. Daphne, AL 36526 (US)

(57) **Abstract**

Systems are provided for an illumination system (22) for a bassinet (20) of a mobile platform. In one example, a system (22) includes a housing (50) including a first housing part (60) defining at least one aperture (84) and a second housing part (62) coupled to the first housing part (60) so as to define a housing cavity (63). The system (22) also includes at least one light source (52) disposed within the housing cavity (63) and adjacent to the at least one aperture (84) such that light output by the at least one light source (52) is directed out of the first housing part (60). The system (22) includes a user input device (54) coupled to the housing (50) that receives user input and a power source (56). The system (22) also includes a control module (58) that supplies power from the power source (56) to the at least one light source (52) to illuminate the bassinet (20) based on the user input.

## Description

### TECHNICAL FIELD

The present disclosure generally relates to mobile platforms, such as aircraft, and more particularly relates to a system for illumination of a baby bassinet onboard an aircraft.

### BACKGROUND

Generally, mobile platforms, such as passenger aircraft, transport passengers to and from various destinations. In certain instances, a bassinet may be provided in a passenger cabin of the aircraft to accommodate infant passengers onboard the aircraft. During flight, one or more of the lights in the passenger cabin may be dimmed or turned off to allow the passengers onboard the aircraft to rest. In situations in which the lights in the passenger cabin are dimmed or turned off, it may be difficult to attend to the infant passenger in the bassinet.

Accordingly, it is desirable to provide improved systems for illumination of a bassinet onboard an aircraft. Furthermore, other desirable features and characteristics of the present disclosure will become apparent from the subsequent detailed description and the appended claims, taken in conjunction with the accompanying drawings and the foregoing technical field and background.

### SUMMARY

In one embodiment, an illumination system for a bassinet of a mobile platform is provided. The system includes a housing including a first housing part defining at least one aperture and a second housing part coupled to the first housing part so as to define a housing cavity. The system also includes at least one light source disposed within the housing cavity and adjacent to the at least one aperture such that light output by the at least one light source is directed out of the first housing part. The system includes a user input device coupled to the housing that receives user input and a power source. The system also includes a control module that supplies power from the power source to the at least one light source to illuminate the bassinet based on the user input.

In one embodiment, a bassinet for a mobile platform is provided. The bassinet includes a first rail that defines a perimeter of a cavity. The first rail is adapted to be coupled to the mobile platform. The bassinet includes a support structure coupled to the first rail that defines a plurality of sides and the cavity. The bassinet also includes a housing that defines a housing cavity and includes a first aperture spaced apart from a second aperture along a longitudinal axis of the housing. The housing is directly coupled to the first rail. The bassinet includes a first light source disposed within the housing cavity adjacent to the first aperture such that light output by the first light source is directed out of the housing and a second light source disposed within the housing cavity adjacent to the second aperture such that light output by the second light source is directed out of the housing. The bassinet also includes a power source and a control module that supplies power from the power source to the first light source and second light source to illuminate the cavity.

In one embodiment, an aircraft is provided. The aircraft includes a bassinet having a plurality of sides and a surface that cooperate to define a cavity. The plurality of sides form a perimeter of the cavity. The aircraft further includes an illumination system coupled to the perimeter of the bassinet. The illumination system includes a housing including a first housing part defining at least one aperture and a second housing part coupled to the first housing part so as to define a housing cavity. The second housing part is coupled to the perimeter of the bassinet. The illumination system includes at least one light source disposed within the housing cavity and adjacent to the at least one aperture such that light output by the at least one light source is directed out of the first housing part. The illumination system also includes a user input device coupled to the housing that receives user input and a power source disposed within the housing cavity. The illumination system includes a control module that supplies power from the power source to the at least one light source to illuminate the cavity of the bassinet based on the user input.

### DESCRIPTION OF THE DRAWINGS

The exemplary embodiments will hereinafter be described in conjunction with the following drawing figures, wherein like numerals denote like elements, and wherein:
Fig. 1A is a schematic illustration of a mobile platform, such as an aircraft, that includes a bassinet including an illumination system in accordance with various embodiments;
Fig. 1B is a schematic illustration of a mobile platform, such as an aircraft, that includes the bassinet including an illumination system in which the illumination system is illuminated, in accordance with various embodiments;
Fig. 2 is a perspective view of the bassinet and illumination system of Fig. 1B;
Fig. 3 is a perspective view of the illumination system of Fig. 2;
Fig. 4 is an exploded view of the illumination system of Fig. 2;
Fig. 5 is a cross-sectional view of the illumination system of Fig. 2, taken along line 5-5 of Fig. 2;
Fig. 6 is a dataflow diagram illustrating a control system of the illumination system in accordance with various embodiments; and
Fig. 7 is a flowchart illustrating a control method of the illumination system in accordance with various embodiments.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

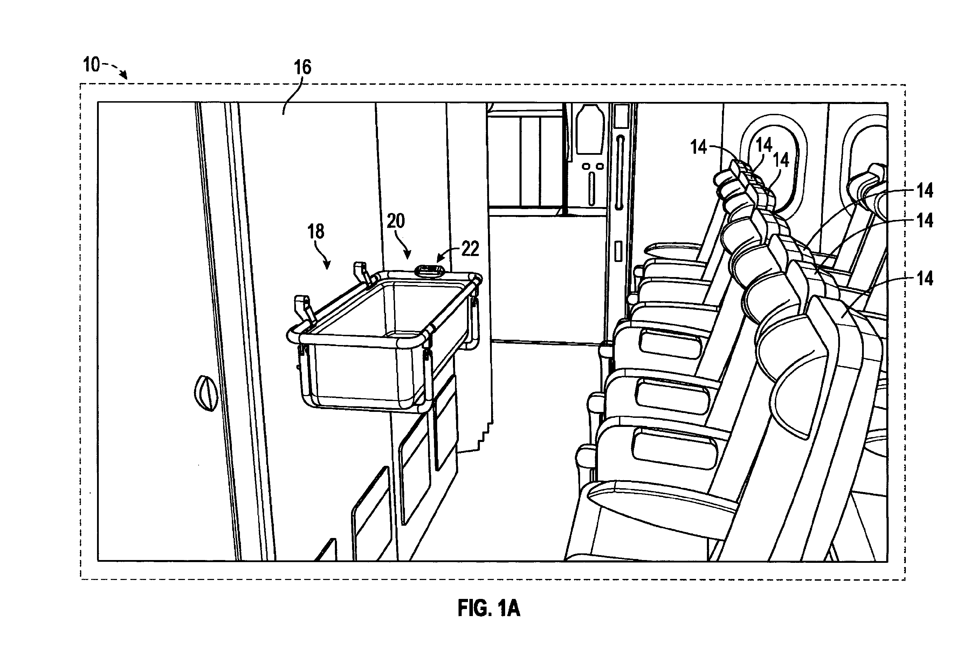

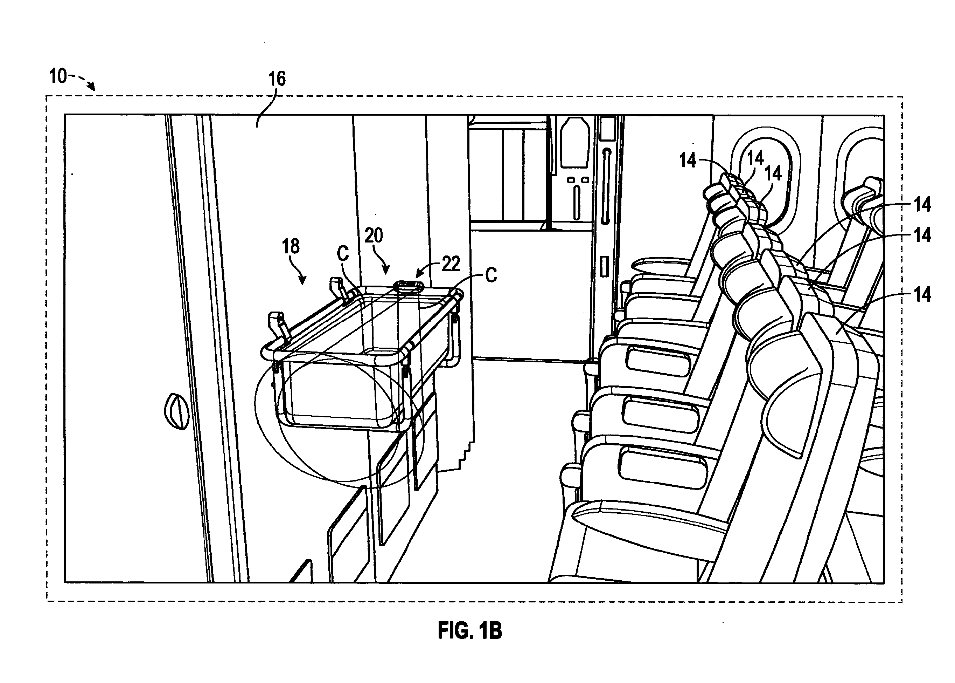

With reference to Figs. 1A and 1B, a mobile platform, such as an aircraft 10, is shown. It should be noted that while an aircraft 10 is described and illustrated herein, the present teachings are applicable to any suitable mobile platform, including, but not limited to, a ship, train, bus, car, etc. In one example, the aircraft 10 includes a passenger cabin 12. The passenger cabin 12 generally includes one or more seats 14, and may include one or more monuments 16. The monuments 16 include, but are not limited to, toilet monuments, kitchen or galley monuments, partitions, class dividers, etc., as known to one skilled in the art. In one example, the passenger cabin 12 includes a bassinet system 18. While the bassinet system 18 is illustrated herein as being coupled to the monument 16, the bassinet system 18 may be coupled to any suitable portion of the passenger cabin 12, such as one of the seats 14, for example. Thus, the illustration herein is merely exemplary.

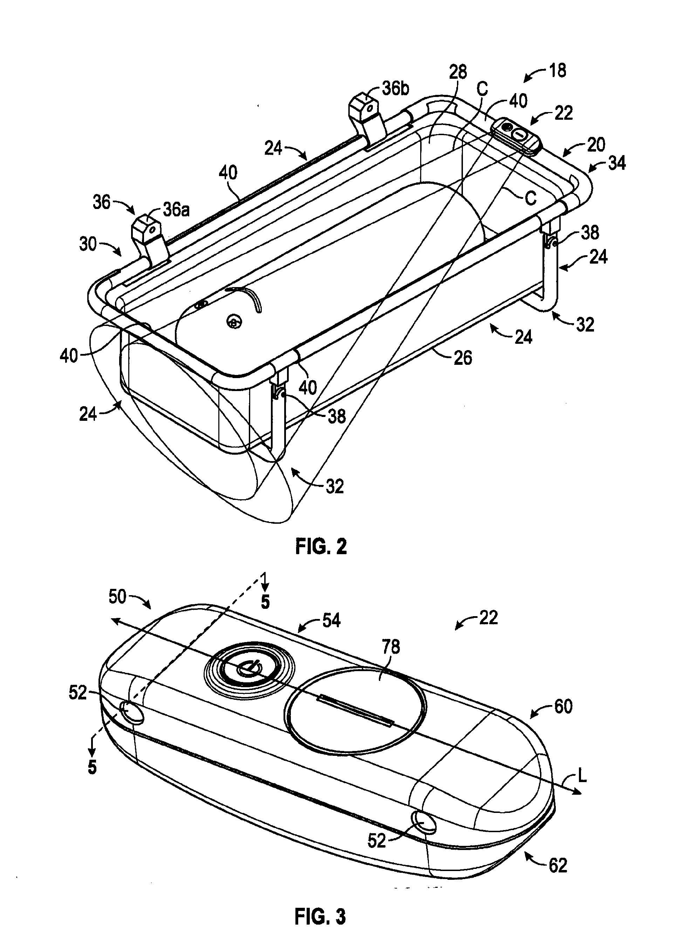

The bassinet system 18 includes a bassinet 20 and an illumination system 22. It should be noted that the illustration of the bassinet 20 herein is merely exemplary, as the bassinet may have any suitable configuration and shape for receiving an infant. In one embodiment, with reference to Fig. 2, the bassinet 20 includes a plurality of sides generally indicated as 24 and a first or bottom surface 26 that cooperate to define a cavity 28 for receipt of an infant. In one example, the plurality of sides 24 and bottom surface 26 are formed by a first or top rail 30, one or more second or bottom rails 32 and a support structure 34. It should be noted that although not illustrated herein, the bassinet 20 may include a retaining flap that extends across a top surface of the cavity 28 (e.g. from a top surface of a first side to a top surface of a second side opposite the first side) to aid in restraining the infant within the cavity 28. Generally, the retaining flap extends across the cavity 28 to be substantially perpendicular to a longitudinal axis of the bassinet 20. The retaining flap is movable relative to the cavity 28 to enable unobstructed access to the cavity 28, and thus, the retaining flap generally would not obstruct light output by the illumination system 22 when the illumination system 22 is in use to illuminate the cavity 28.

In this example, the top rail 30 extends around a perimeter of the bassinet 20 and defines a substantially rectangular shape. Thus, the top rail 30 defines a perimeter for the cavity 28 that receives the infant. The top rail 30 may be cylindrical, and thus, the top rail 30 may have a curved surface. The top rail 30 includes at least one mounting point 36 and one or more coupling points 38. The at least one mounting point 36, in one example, comprises two mounting points 36a, 36b, for coupling the bassinet 20 to the monument 16. It should be noted that the mounting points 36a, 36b are merely exemplary, and alternative mechanisms may be employed to secure the bassinet 20 in the passenger cabin 12.

The one or more coupling points 38 couple the one or more bottom rails 32 to the top rail 30. In one example, the coupling points 38 comprise extensions that project outwardly or downwardly from the top rail 30 and include a suitable fastening mechanism, such as a bore, for receipt of a fastener to couple the top rail 30 to the one or more bottom rails 32. The coupling points 38 may have a reduced diameter to facilitate the receipt of a respective one of the coupling points 38 in a respective end of one of the one or more bottom rails 32. The one or more bottom rails 32 may each be substantially U-shaped, and may include ends sized to receive the one or more coupling points 38. The ends may include one or more bores through which a suitable fastening mechanism is received, such-as a bolt, for example.

In this example, the support structure 34 generally defines the plurality of sides 24, bottom surface 26 and cavity 28. The support structure 34 includes one or more pockets 40 along a top surface for coupling the support structure 34 to the top rail 30. In other words, the top rail 30 may be received in the one or more pockets 40. The support structure 34 has sufficient rigidity to define the cavity 28, and may be comprised of a suitable material, such as a fabric. A bottom surface of the support structure 34 may be further supported on the one or more bottom rails 32.

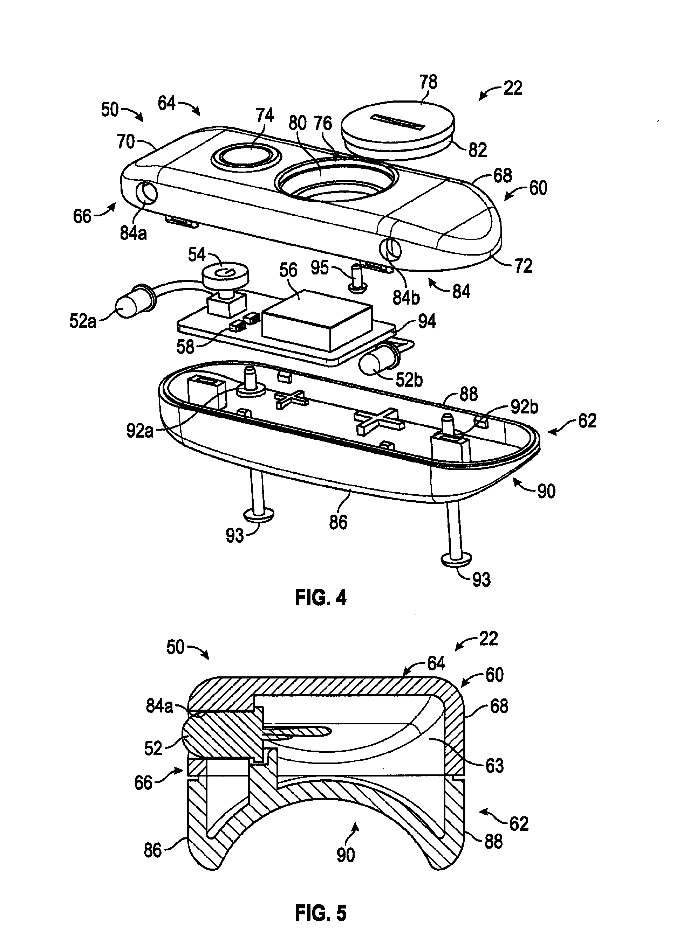

The illumination system 22 is coupled to the bassinet 20. It should be noted that while the illuminations system 22 is described and illustrated herein as being coupled to the bassinet 20, the illumination system 22 may be coupled to any desired structure, such as shelving, for example. The illumination system 22 outputs light or light cones C, which are directed into the bassinet 20 to illuminate the bassinet 20, and an infant in the bassinet 20, to facilitate attending to the needs of the infant in the bassinet 20. In one embodiment, with reference to Figs. 3 and 4, the illumination system 22 includes a housing 50, at least one light source 52, a user input device 54, a power source 56 (Fig. 4) and a control module 58 (Fig. 4). The power source 56 may be, for example, a battery or the like. The user input device 54 may be, for example, a switch or the like.

The at least one light source 52, user input device 54, power source 56 (Fig. 4) and control module 58 (Fig. 4) are at least partially received within the housing 50. The housing 50 is coupled to the bassinet 20. In one example, the housing 50 is coupled to the top rail 30 of the bassinet 20 (Fig. 2), and may be coupled to the top rail 30 at any desired position on the top rail 30. The housing 50 is composed of any suitable material, such as a metal, metal alloy or polymer. In one example, the housing 50 is composed of a polymer. The housing 50 may have a clamshell design, and includes a first housing part 60 and a second housing part 62 that cooperate to define a cavity 63 (Fig. 5) to at least partially house or contain the at least one light source 52, user input device 54, power source 56 (Fig. 4) and control module 58 (Fig. 4). The housing 50 extends along a longitudinal axis L (Fig. 3).

With reference to Fig. 4, the first housing part 60 includes a first surface 64, a first side 66 and a second side 68. The first surface 64 includes a first end 70, a second end 72, a user input aperture 74 and a battery access aperture 76. In one example, the first surface 64 tapers at the first end 70 and second end 72, however, the first surface 64 may have any desired shape. The user input aperture 74 is near the first end 70, and is sized to enable a user to access the user input device 54, and may allow a portion of the user input device 54 to extend therethrough. In one example, the user input aperture 74 is substantially annular; however, the user input aperture 74 may have any desired shape. The battery access aperture 76 is positioned between the user input aperture 74 and the second end 72. The battery access aperture 76 is substantially annular and may be sized to receive a correspondingly shaped battery cap 78. In one example, the battery access aperture 76 includes a locking thread 80, which cooperates with a locking thread 82 formed about a circumference of the battery cap 78. The cooperation between the locking threads 80, 82 removably couple the battery cap 78 to the first housing part 60 to provide access to the power source 56.

The first side 66 of the first housing part 60 is substantially opposite the second side 68. The first side 66 includes at least one light source aperture 84 to enable light output from the at least one light source 52 to be projected or directed out of the first housing part 60. In one example, the first side 66 includes a first light source aperture 84a and a second light source aperture 84b. The first light source aperture 84a is generally spaced apart from the second light source aperture 84b along the longitudinal axis L of the housing 50.

The second housing part 62 mates with the first housing part 60. The second housing part 62 includes a first side 86 opposite a second side 88, and a second surface 90. The second surface 90 is curved, and in one example, is concave between the first side 86 and second side 88, as illustrated in Fig. 5. Generally, the radius of curvature of the second surface 90 corresponds to the radius curvature of the top surface of the top rail 30, to facilitate coupling the housing 50 on the top rail 30. With reference back to Fig. 4, the second surface 90 also includes at least one coupling aperture 92, and in one example, includes two coupling apertures 92a, 92b. The coupling apertures 92a, 92b each include a plurality of threads for threadably engaging a fastener 93 to couple the housing 50 to the top rail 30. In this example, the top rail 30 includes two apertures through which a respective one of the fasteners 93 are received. The fasteners 93 are threaded into engagement with the plurality of threads on the coupling apertures 92a, 92b to couple the housing 50 to the top rail 30. In addition, the fasteners 93 may be received in corresponding apertures defined in a portion of the first housing part 60 to further couple the first housing part 60 to the second housing part 62, if desired.

With continued reference to Fig. 4, at least one light source 52 outputs the at least one light or light cone C (Fig. 2) from the illumination system 22. In one example, the at least one light source 52 includes a first light source 52a and a second light source 52b, however, the illumination system 22 can include any number of light sources or a single light source, if desired. The light sources 52a, 52b each comprise any suitable light source capable of outputting light or light cones to illuminate an area, including, but not limited to, a light emitting diode (LED), organic light emitting diode (OLED), photoluminescence strip, photoluminescence fabric, etc. In one example, the light output by the light sources 52a, 52b is variable based upon a current supplied to light sources 52a, 52b, as will be discussed in greater detail below. Generally, the light sources 52a, 52b are in communication with the control module 58 to receive power from the power source 56 over a suitable architecture that facilitates the transfer of power and/or data, such as a carrier substrate or circuit board 94, as known to those skilled in the art. In one example, the circuit board 94 is coupled to the second housing part 62 via a mechanical fastener, such as a screw 95.

The user input device 54 in communication with the control module 58, and receives input from an operator and generates data and/or signals based thereon. In one example, the user input device 54 is mounted to the circuit board 94, however, the user input device 54 can be in communication with the control module 58 via any suitable communication architecture. The user input device 54 is any suitable device capable of receiving user input, including, but not limited to, a switch, a button, a microphone, a touchscreen, or other suitable device to receive commands from the user. In one example, the user input device 54 is a switch, and a portion of the switch extends through the user input aperture 74 to enable the user to move, for example, depress and release, the switch. In this example, the movement of the switch generates data and/or signals for the control module 58. It should be noted that the user input device 54 is merely exemplary, as the control module 58 can activate the light sources 52a, 52b based on receipt of other input, such as data and/or signals generated by a motion detector coupled to the bassinet 20 and/or pressure pad coupled to the support structure 34, for example.

The power source 56 is in communication with the control module 58 for supplying power to the light sources 52a, 52b. In one example, the power source 56 is mounted to the circuit board 94; however, the power source 56 can be in communication with the control module 58 via any suitable architecture that facilitates the transfer of power and/or data. The power source 56 is any suitable device capable of supplying power, such as an electric current, including, but not limited to, one or more batteries. It should be noted that the power source 56 described herein as being contained within the housing 50 is merely exemplary, as the power source may be external or remote from the housing 50, if desired.

In various embodiments, the control module 58 controls the operation of the light sources 52a, 52b based on one or more of the data and/or signals from the user input device 54 and further based on the illumination systems and methods of the present disclosure to illuminate at least a portion of the bassinet 20. As will be discussed, the control module 58 outputs one or more signals to the light sources 52a, 52b to supply power to the light sources 52a, 52b from the power source 56 based on the signals from the user input device 54. It should be noted that the control module 58 is in communication with the power source 56 and user input device 54 over a suitable architecture that allows the transfer of data and/or power, such as the circuit board 94.

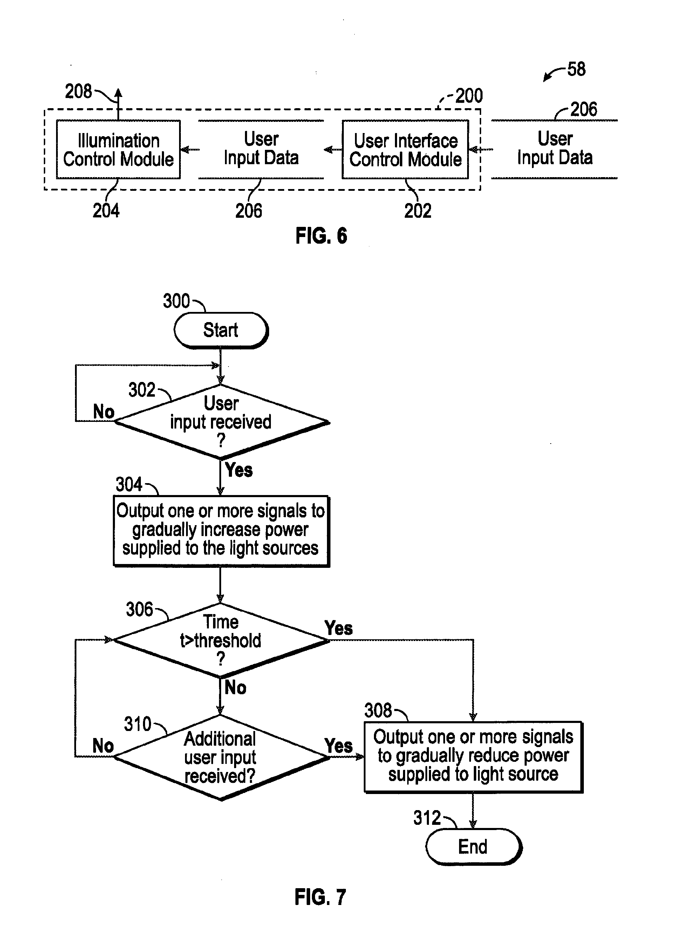

Referring now to Fig. 6, and with continued reference to Figs. 1A-5, a dataflow diagram illustrates various embodiments of an illumination control system 200 for the illumination system 22 (Figs. 1A and 1B) that may be embedded within the control module 58. Various embodiments of the illumination control system according to the present disclosure can include any number of sub-modules embedded within the control module 58. As can be appreciated, the sub-modules shown in Fig. 6 can be combined and/or further partitioned to similarly control the output of the light sources 52a, 52b of the illumination system 22 (Fig. 4). Inputs to the system can be sensed from the aircraft 10 (Figs. 1A and 1B), received from other control modules (not shown), and/or determined/modeled by other sub-modules (not shown) within the control module 58. In various embodiments, the control module 58 includes a user interface control module 202 and an illumination control module 204.

The user interface control module 202 receives as input user input data 206 based on a user's interaction with the user input device 54. In one example, the user input data 206 comprises a request to activate or deactivate the light sources 52a, 52b. Based on the receipt of the user input data 206, the user interface control module 202 sets the user input data 206 for the illumination control module 202.

The illumination control module 202 receives as input user input data 206. The illumination control module 202 generates one or more signals 208 to supply power from the power source 56 to the light sources 52a, 52b based on the user input data 206. In various embodiments, the illumination control module 202 varies the amount of power supplied by the power source 56 based on a time period associated with the receipt of the user input data 206. In one example, the one or more signals 208 are generated to supply power to the light sources 52a, 52b for a predefined period of time from an initial receipt of user input data 206. The predefined time period is about five minutes, however, the predefined time period may be about ten minutes.

Referring now to Fig. 7, and with continued reference to Figs. 1A-6, a flowchart illustrates a control method that can be performed by the control module 58 (Fig. 4) in accordance with the present disclosure. As can be appreciated in light of the disclosure, the order of operation within the method is not limited to the sequential execution as illustrated in Fig. 7, but may be performed in one or more varying orders as applicable and in accordance with the present disclosure.

The method begins at 300. At 302, the method determines if user input data 206 has been received from the user's interaction with the user input device 54. If user input data 206 is received, the method goes to 304. Otherwise, the method loops.

At 304, the method outputs one or more signals 208 to supply the light sources 52a, 52b with power. In one example, the method outputs the one or more signals 208 to ramp or gradually increase the power supplied from an initial starting power supply to a maximum power supply such that the light output from the light sources 52a, 52b increases gradually from no light output to maximum light output (fade-in). At 306, the method determines if a time t since the user input data 206 was received is greater than a predefined threshold time *T.* The predefined threshold time *T* is about five minutes, for example. If the time *t* since the user input data 206 was received is greater than the predefined threshold time *T,* the method goes to 308. Otherwise, at 310, the method determines if additional user input data 206 has been received from the user's interaction with the user input device 54. If user input data 206 is received, the method goes to 308. Otherwise, the method loops to 306.

At 308, the method outputs one or more signals 208 to remove the power from the light sources 52a, 52b. In one example, the method outputs the one or more signals 208 to gradually reduce the supply of power to the light sources 52a, 52b from the maximum power supplied to zero power supplied such that the light output from the light sources 52a, 52b decreases gradually from maximum light output to no light output (fade-out). The method ends at 312.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the appended claims and the legal equivalents thereof.

## Claims

1. An illumination system (22) for a bassinet (20) of a mobile platform, comprising:
a housing (50) including a first housing part (60) defining at least one aperture (84) and a second housing part (62) coupled to the first housing part (60) so as to define a housing cavity (63);
at least one light source (52) disposed within the housing cavity (63) and adjacent to the at least one aperture (84) such that light output by the at least one light source (52) is directed out of the first housing part (60);
a user input device (54) coupled to the housing (50) that receives user input;
a power source (56); and
a control module (58) that supplies power from the power source (56) to the at least one light source (52) to illuminate the bassinet (20) based on the user input.

2. The system (22) of Claim 1, wherein the second housing part (62) is directly coupled to the bassinet (20).

3. The system (22) of Claim 1, wherein the at least one light source (52) comprises a first light source (52a) and a second light source (52b), and the first light source (52a) is spaced apart from the second light source (52b) along a longitudinal axis (L) of the housing (50).

4. The system (22) of Claim 3, wherein the at least one aperture (84) comprises a first aperture (84a) and a second aperture (84b), and the first light source (52a) is adjacent to the first aperture (84a) and the second light source (52b) is adjacent to the second light aperture (84b).

5. The system (22) of Claim 1, wherein the first housing part (60) includes a first surface (64) and a first side (66) opposite a second side (68), and the at least one aperture (84) is defined in the first side (66).

6. The system (22) of Claim 5, wherein the first surface (64) of the first housing part (60) includes a user input aperture (74), and a portion of the user input device (54) is accessible through the user input aperture (74).

7. The system (22) of Claim 1, wherein the power source (56) is disposed in the housing cavity (63).

8. The system (22) of Claim 1, wherein the control module (58) gradually supplies power to the at least one light source (52).

9. A bassinet (20) for a mobile platform, comprising:
a first rail (30) that defines a perimeter of a cavity (28), the first rail (30) adapted to be coupled to the mobile platform;
a support structure (34) coupled to the first rail (30) that defines a plurality of sides (24) and the cavity (28);
a housing (50) that defines a housing cavity (63) and includes a first aperture (84a) spaced apart from a second aperture (84b) along a longitudinal axis (L) of the housing (50), the housing (50) directly coupled to the first rail (30);
a first light source (52a) disposed within the housing cavity (63) adjacent to the first aperture (84a) such that light output by the first light source (52a) is directed out of the housing (50);
a second light source (52b) disposed within the housing cavity (63) adjacent to the second aperture (84b) such that light output by the second light source (52b) is directed out of the housing (50);
a power source (56); and
a control module (58) that supplies power from the power source (56) to the first light source (52a) and second light source (52b) to illuminate the cavity (28).

10. The bassinet (20) of Claim 9, further comprising:
a user input device (54) that receives user input,
wherein the control module (58) supplies power from the power source (56) to the first light source (52a) and second light source (52b) based on the user input.

11. The bassinet (20) of Claim 9, wherein the housing (50) comprises a first housing part (60) and a second housing part (62) that cooperate to define the housing cavity (63), and the first aperture (84a) and the second aperture (84b) are defined in the first housing part (60).

12. The bassinet (20) of Claim 11, wherein the second housing part (62) comprises a first side (86) opposite a second side (88) and a surface (90) that extends between the first side (86) and the second side (88), the surface (90) curved to correspond with a curvature of the first rail (30).

13. The bassinet (20) of Claim 10, wherein the control module (58) gradually supplies power to the first light source (52a) and second light source (52b) based on the user input.

14. An aircraft (10), comprising:
a bassinet (20) having a plurality of sides (24) and a surface (26) that cooperate to define a cavity (28), the plurality of sides (24) forming a perimeter of the cavity (28);
an illumination system (22) coupled to the perimeter of the bassinet (20), the illumination system (22) including:
a housing (50) including a first housing part (60) defining at least one aperture (84) and a second housing part (62) coupled to the first housing part (60) so as to define a housing cavity (63), the second housing part (62) coupled to the perimeter of the bassinet (20);
at least one light source (52) disposed within the housing cavity (63) and adjacent to the at least one aperture (84) such that light output by the at least one light source (52) is directed out of the first housing part (60);
a user input device (54) coupled to the housing (50) that receives user input;
a power source (56) disposed within the housing cavity (63); and
a control module (58) that supplies power from the power source (56) to the at least one light source (52) to illuminate the cavity (28) of the bassinet (20) based on the user input.

15. The aircraft (10) of Claim 14, wherein the control module (58) gradually decreases the supply of power from the power source (56) to the at least one light source (52) based on a time (t) since the receipt of user input exceeding a predefined threshold time (T).
